# EUROPEAN PATENT SPECIFICATION

(11) **EP 1 131 363 B1**
(45) Date of publication and mention of the grant of the patent: **28.05.2003**
(21) Application number: 99940116.9
(22) Date of filing: 30.07.1999
(51) Int. Cl.: C08F 220/18, C08F 230/02, C09J 4/00, C09D 4/00, F16J 15/14, C09K 3/10

(54) **METHOD OF BONDING ALUMINIUM SUBSTRATES WITH ANAEROBIC SEALANTS TO FORM A SEAL**
VERFAHREN ZUM HAFTEN VON ALUMINIUMSUBSTRATEN MIT EINEM ANAEROBISCHEN DICHTUNGSMITTEL, UM EINE DICHTUNG HERZUSTELLEN
PROCEDE POUR LIER DES SUBSTRATS D'ALUMINIUM AVEC DES PRODUITS D'ETANCHEITE ANAEROBIES EN VUE DE FORMER UN ELEMENT D'ETANCHEITE

(30) Priority: 16.11.1998 IE 980948
(43) Date of publication of application: 12.09.2001
(73) Proprietor: Loctite (R & D) Limited, Tallaght, Dublin 24 (IE)
(72) Inventor: WROBEL, Peter, Dublin 16 (IE); HOULIHAN, James, Co. Clare (IE)
(74) Representative: Lane, Cathal Michael
(86) International application number: EP9905573
(87) International publication number: WO00029456

(56) References cited:
- EP-A- 0 284 027
- GB-A- 2 111 515
- US-A- 4 223 115
- US-A- 4 322 509
- US-A- 4 990 281
- US-A- 5 240 766

## Description

### TECHNICAL FIELD

This invention relates to a method of bonding an aluminium substrate to another substrate to form a seal in an environment subject to elevated temperatures, particularly in an engine, suitably for the automotive industry. The invention also relates to the use of a selected adhesion promoter in anaerobic sealants for improved gasketting performance on an aluminium substrate in a working environment at elevated temperatures.

### BACKGROUND ART

Anaerobic flange adhesives have commonly been used on steel substrates to form seals, for example in the form of gaskets, between flat metal faces. There is a recent trend in the automotive industry to use aluminium components instead of steel ones. As with steel flanges, in order to be commercially acceptable good adhesion between the anaerobic flange adhesive and the aluminium substrate(s) should be retained in the particular ageing conditions found in an engine.

Anaerobic flange adhesives are available which give good adhesion to steel and retain this adhesion after heat ageing at engine running temperatures in fluids such as oil and water/glycol mixtures which would be encountered in an engine. However on an aluminium substrate the initial adhesion of such adhesives is good but after heat ageing in the above-mentioned fluids the adhesion reduces sharply. There is therefore a need for an improvement in anaerobic sealant technology to overcome this problem.

Face-to-face joints between even carefully finished flat metal substrates have a so-called "zero gap" i.e. there is metal-to-metal contact in some areas (e.g. 25-35% of the total face-to-face area) while in other areas the gap is up to about 50 micrometres, more often in the range 10-40 micrometres, especially 20-30 micrometres. Anaerobic flange adhesives fill and seal this gap caused by the surface roughness, producing 100% contact. In addition, the automotive industry desires anaerobic flange adhesives to cure at ambient temperature.

U.S. Patent No. 4, 044, 044 (Saito) describes an anaerobic adhesive composition containing 0.05 to 20 parts by weight of phosphate esters of hydroxyacrylates per 100 parts by weight of polymerizable acrylic ester monomer. The compositions as described in the examples are cured at 120°C. There is no disclosure of use of the compositions on aluminium substrates and no teaching about the performance of the composition in the working environment of an engine.

U.S. Patent No. 4, 322, 509 (Zalucha) acknowledges the Saito patent but states that the addition of organophosphorus esters is accompanied by a significant increase in the time required for cure and, additionally, requires curing temperatures in excess of 100°C. The Zalucha '509 patent therefore proposes the addition of certain tertiary dimethylaryl amines to reduce the cure time and temperature, plus a carboxylated nitrile elastomer to substantially eliminate precipitation of amine phosphorous salts. One exemplary composition is said to be effective as an adhesive for non-ferrous materials such as galvanised steel and aluminium but the tests are conducted on steel. There is no teaching about performance of the compositions in the working environment of an engine.

U.S. Patent No. 4, 223, 115 (Zalucha et al.) describes structural adhesive formulations for metal bonding in the transportation industry, for example in fabricating vehicle bodies. The formulations incorporate phosphorus-containing compounds and are said to increase the bonding of oily metals, especially steel, aluminium and copper. Use of the formulations for aluminium - aluminium metal bonding is described. However these formulations are aerobic and are intended for fabricating vehicle body assemblies which are subject to quite different environments (such as saline and humid environments) as compared to vehicle engines. Test data at column 27 of the Zalucha '115 patent describe testing in gasoline, water and salt solutions, at room temperature. There is no teaching about anaerobic sealants for sealing aluminium substrates in the working environment of an engine, cycling from low to high temperature repeatedly and with exposure to oil and water/glycol mixtures. Reference is also directed to U.S. Patent No. 5, 641, 834 for other structural adhesive compositions incorporating the phosphorous-containing compounds.

U.S. Patent No. 4,647,638 (Yokoshima *et al*.) describes modified organophosphates for use in anaerobic adhesives, which are cured by irradiation with ultraviolet light, or by addition of an organic peroxide with heating to 120°C. There is no reference to aluminium substrates or to flange sealing in auto engines.

It would be desirable to provide a method of bonding an aluminium substrate to a second substrate to form a seal in engines with improved retention of adhesion after exposure to heat and fluids such as are encountered in the working environment of an engine. While the invention is more specifically concerned with automobile engines, similar problems may be encountered in other types of engines and in other working environments where a seal is exposed to fluids which have an adverse effect on the retention of adhesion at elevated temperatures.

### SUMMARY OF THE INVENTION

The present invention provides a method of providing a seal between an aluminium substrate and a second substrate, where the seal is exposed to engine fluids selected from oils and coolant mixtures at elevated temperatures in the range from 60°C to 175°C. The method includes the steps of
(a) applying to at least one of the substrates an anaerobic sealant composition comprising:
   (i). one or more polymerizable (meth)acrylate ester monomers,
   (ii). an anaerobic cure-inducing component, and
   (iii). an adhesion promoter comprising one or more phosphorus-containing compounds having the general formula I 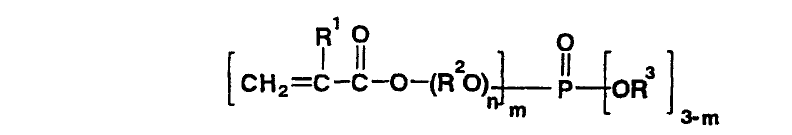
   where
   R¹ is H, CH₃ or C₂H₅
   R² is -CH₂-, -C₂H₄-, -C₃H₆-, or -CH₂-CH(CH₃)-
   R³ is H, CH₃ or C₂H₅
   n is an integer from 1 to 10, and m is an integer from 1 to 3,
(b) bringing the substrates into face-to-face contact, and
(c) allowing or enabling the composition to cure at substantially ambient temperature.

Suitably R³ is H in at least one of the groups -OR³ and desirably is H in each of the groups -OR³. Suitably R¹ is CH₃.

In one aspect, the invention includes a method as defined above for providing a seal between an aluminium substrate and a second substrate in an engine, where the seal is exposed to engine fluids at engine operating temperatures (e.g. -30°C to + 150°C). Engine fluids include engine oils and water/glycol mixtures. The invention is particularly directed towards providing a seal between flat faces, one of which is suitably on a flange, for example forming part of an engine component, and the second of which is suitably on an external surface of another engine component such as the engine block.

In a particular aspect, the invention includes a method of providing a seal between an aluminium substrate and a second substrate in the cooling circuit of an engine, said seal being exposed to water/glycol mixtures at engine cooling - circuit temperatures (e.g. 80 to 130°C, especially 80 - 100°C).

The method of the invention shows improved performance resulting from the selection of the organophosphorus compounds as adhesion promoters, in comparison to other acidic materials which are known for this purpose.

In another aspect, the invention includes the use of one or more phosphorus-containing compounds of the general formula I as defined above as an adhesion promoter in a flexible anaerobic sealant composition which is curable at substantially ambient temperature, for providing a seal between an aluminium substrate and a second substrate in face-to-face contact, where the composition has the ability to retain adhesion on the aluminium substrate while exposed to fluids at elevated temperatures.

In a further aspect the invention includes an assembly of substrates having a seal provided by a method as defined above, in particular an assembly of an aluminium flange against a second substrate. The invention also concerns an engine incorporating an assembly of substrates as defined above in this paragraph.

The invention will now be more fully described.

### Brief Description of the Drawing

One embodiment of the invention as applied to an automotive engine is illustrated in the accompanying drawing, which is a pictorial view of a water pump and part of an engine block aligned for assembly.

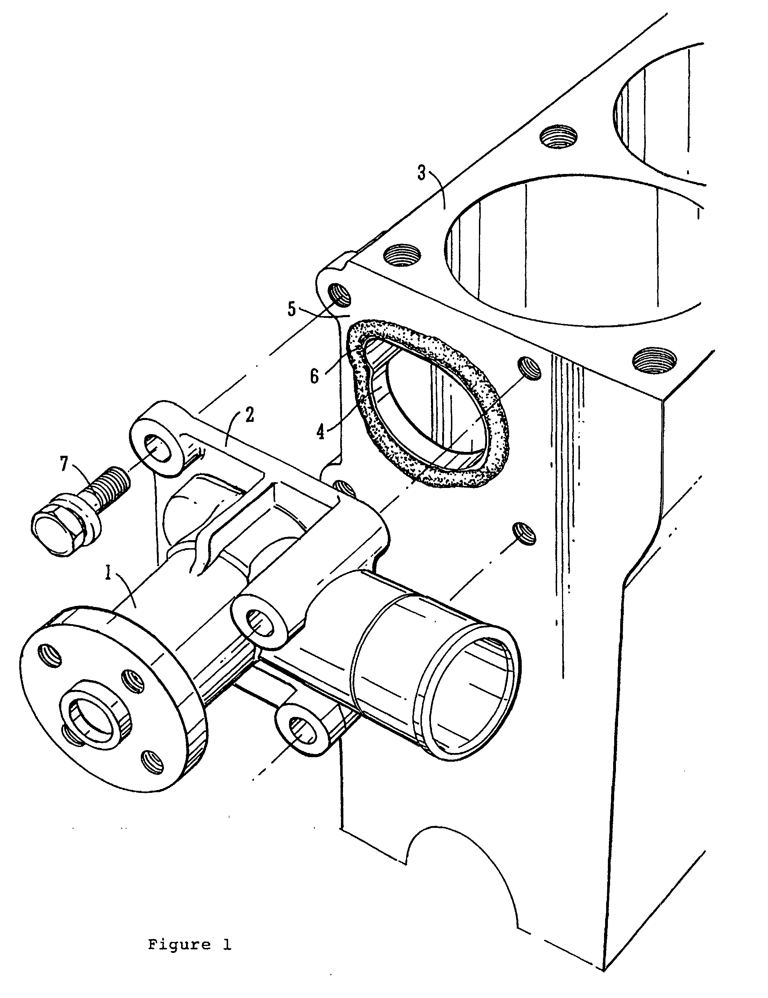

As shown in figure 1, a water pump housing 1 of aluminium has a flange 2 which is also of aluminium and which has a flat face. An engine block 3 has an aperture 4 which is designed to communicate with a corresponding aperture on the face of the water pump (not shown). The area 5 of the surface of the engine defining the aperture 4 forms a flat face against which the face of the water pump is to be assembled in face-to-face contact. Liquid sealant composition 6 in accordance with the invention is applied to the area 5 around the aperture 4 to form a gasket. During the course of assembly the water pump is brought against the engine block and is secured thereto by bolts 7. The sealant composition cures under anaerobic conditions created in the so-called "zero gap" between the two substrates in face-to-face contact.

### DETAILED DESCRIPTION OF INVENTION

The present invention provides a method of providing a seal between an aluminium substrate and a second substrate, where the seal is exposed to fluids at elevated temperatures. The method include the steps of
(a) applying to at least one of the substrates an anaerobic sealant composition comprising:
   (i). one or more polymerizable (meth)acrylate ester monomers,
   (ii). an anaerobic cure-inducing component, and
   (iii). an adhesion promoter comprising one or more phosphorus-containing compounds having the general formula I 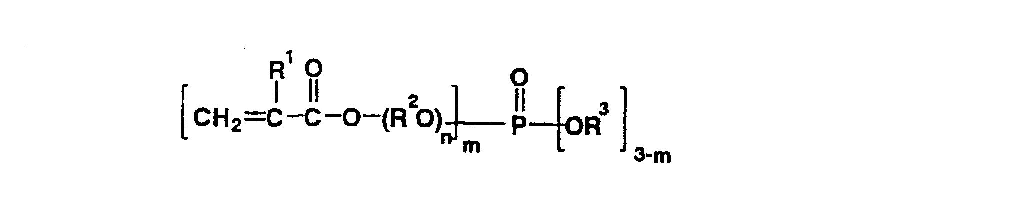
   where
   R¹ is H, CH₃ or C₂H₅
   R² is -CH₂-, -C₂H₄-, -C₃H₆-, or -CH₂-CH(CH₃)-
   R³ is H, CH₃ or C₂H₅
   n is an integer from 1 to 10, and m is an integer from 1 to 3,
(b) bringing the substrates into face-to-face contact, and
(c) allowing or enabling the composition to cure at substantially ambient temperature.

Whereas conventional wisdom taught that the addition of organophosphorus esters required curing temperatures in excess of 100°C, the present inventors have found that in the situation of so-called "zero gap" between the substrates in face-to-face contact the anaerobic compositions will cure at a satisfactory rate at or around ambient temperature (18-25°C, especially about 21°C).

The elevated temperatures to which the seal is exposed may be in the range from 60°C to 175°C. The seal may also be exposed to temperatures below 60°C, down to -30°C in some climatic conditions. Cycling of temperatures from 5°C to 150°C is frequent.

The fluids to which the seal is exposed include fluids which are known to degrade adhesion on metals. The fluids include oils and hydroxy-containing materials such as engine coolant mixtures.

One or both of the substrates may suitably be a flange, more particularly a flange at a joint between components in an engine assembly. The second substrate may be of aluminium or may be of another material on which anaerobic sealants are effective, such as iron, steel and other metals.

The polymerizable (meth)acrylate ester monomers (i) useful in this invention include a wide variety of materials such as those given in U.S. Patent No. 3, 218, 305 (Krieble), U.S. Patent No. 4, 417, 92 (Azevedo), U.S. Patent No. 4, 451, 615 (Charnock), U.S. Patent No. 5, 116, 558 (Wrobel *et al*.), and U.S. Patent No. 3, 996, 308 (Douek *et al*.). One desirable class of polymerisable monomers is the poly- and mono-functional acrylate and methacrylate esters of the general formula:

CH₂=C(R)COOR¹ (I)

where R may be hydrogen, halogen or alkyl of 1 to about 4 carbon atoms, and R¹ may be selected from alkyl, cycloalkyl, alkenyl, cycloalkenyl, alkaryl, aralkyl or aryl groups of 1 to about 16 carbon atoms, any of which may be optionally substituted or interrupted as the case may be with silane, silicon, oxygen, halogen, carbonyl, hydroxyl, ester, carboxylic acid, urea, urethane, carbamate, amine, amide, sulfur, sulonate, sulfone and the like.

More specific acrylate monomers particularly desirable for use herein include polyethylene glycol di-(meth)acrylates, such as triethylene glycol di-methacrylate, dipropylene glycol di-(meth)acrylate, bisphenol-A di-(meth)acrylates, such as ethoxylated bisphenol-A methacrylate ("EBIPMA") and tetrahydrofuran (meth)acrylates and di-(meth)acrylates, hydroxypropyl (meth)acrylate, hexanediol di-(meth)acrylate, trimethylol propane tri-(meth)acrylate, 2-hydroxyethyl (meth)acrylate, methyl (meth)acrylate, cyclohexyl (meth)acrylate, 2-aminopropyl (meth)acrylate, an acrylate ester corresponding to the structure shown below: 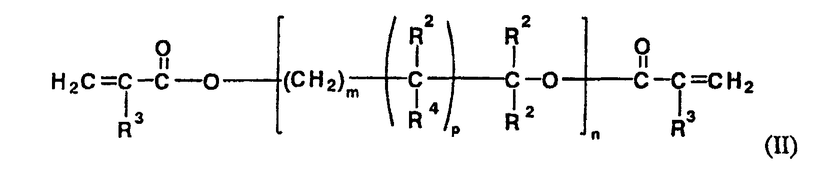 where R² may be selected from hydrogen, alkyl of 1 to about 4 carbon atoms, hydroxyalkyl of 1 to about 4 cabon atoms or 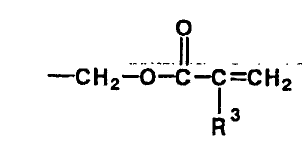 R³ may be selected from hydrogen, halogen, and alkyl of 1 to about 4 carbon atoms;
R⁴ may be selected from hydrogen, hydroxy and 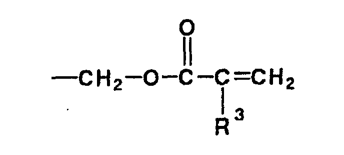 m is an integer equal to at least 1, *e.g.,* from 1 to about 8 or higher, for instance, from 1 to about 4;
n is an integer equal to at least 1, *e.g*., 1 to about 20 or more; and
p is 0 or 1.
Of course, combinations of these (meth)acrylate monomers may also be used.

The polymerizable (meth)acrylate ester monomers suitably include a (meth)acrylate-terminated prepolymer in addition to a poly- or mono functional (meth)acrylate ester.

Other preferred acrylate ester monomers are those selected from the class consisting of urethane acrylates having the general formula:

(CH²=C(R⁵)COOR⁶OCONH-)₂R⁷ (III)

wherein R⁵ is H, CH₃, C₂H₅ or Cl; R⁶ is (i) a C₁₋₈
hydroxyalkylene or aminoalkylene group, (ii) a C₁₋₆ alkylamino C₁₋₈ alkylene, a hydroxyphenylene, aminophenylene, hydroxynaphthylene or aminonaphthylene optionally substituted by a C₁₋₃ alkyl, C₁₋₃ alkylamino or di-C₁₋₃ alkylamino group; and R⁷ is C₂₋₂₀ alkylene, alkenylene, or cycloalkylene, C₆₋₄₀ arylene, alkarylene, aralkylene, alkyloxyalkylene or aryloxyarylene optionally substituted by 1-4 halogen atoms or by 1-3 amino or mono- or di-C₁₋₃ alkylamino or C₁₋₃ alkoxy groups; or said acrylates having the general formula:

(CH₂=C(R⁵)COOR⁶OCON(H)R⁷N(H)COX-)ₙR⁸ (IV)

wherein R⁵, R⁶ and R⁷ have the meanings given above; R⁸ is the non-functional residue of a polyamine or a polyhydric alcohol having at least n primary or secondary amino or hydroxy groups respectively; X is O or NR⁹ where R⁹ is H or a C₁₋₇ alkyl group; and n is an integer from 2 to 20.

Copolymers or mixtures of monomers disclosed herein with other compatible monomers are also contemplated.

The anaerobic cure-inducing component (ii) useful in the present invention includes a variety of ingredients such as one or more initiators of polymerization and one or more accelerators of polymerization.
Initiators of free-radical polymerization useful in the instant composition include peroxides, hydroperoxides, peresters, and peracids. Desirably the initiator is a peroxide such as benzoyl peroxide or a hydroperoxide such as cumene hydroperoxide. Such initiators are generally present in the sealant composition in the amounts of about 0.1% to about 5% by weight of the composition, and desirably about 0.1 % to about 2.0 % by weight.

Commonly known accelerators of polymerization include amines (including amine oxides, sulfonamides, and triazines) and sulfimides. Tertiary amines, such as N,N-dimethyl-p-toluidine, N,N-dimethyl-o-toluidine, N,N-diethyl-p-toluidine and/or N,N-diethyl-o-toluidine, and sulfimides such as 3-oxo-2, 3-dihydrobenz-[d]isothiazole-1,1-dioxide, commonly known as saccharin, are particularly useful as are acetyl phenylhydrazine and maleic acid. Two or more of these materials may be used in combination. Of course, other materials known to induce anaerobic cure may also be included or substituted therefor. See for example Loctite U.S. Patent Nos. 3, 218, 305 (Krieble), 4, 180, 640 (Melody), 4, 287, 330 (Rich) and 4,321,349 (Rich). Other suitable accelerators are organometallic compounds, preferably organometallic polymers containing a metallocene moiety such as a ferrocene moiety. Suitable metallocenes in related compositions are disclosed more fully in U.S. Patent No. 3, 855, 040. The accelerators are preferably added to the monomer in amounts of about 0.1 % to about 2.5% by weight of the composition. Other metallo-containing materials which are non-polymeric have also been found to be effective.

Inhibitors and chelators, well recognised in the art for imparting stability to polymerizable compositions and for scavenging free radicals, are recommended. Those inhibitors useful in the present composition are usually selected from the group consisting of hydroquinones, benzoquinones, naphthoquinones, phenanthraquinones, anthraquinones, and substituted compounds of any of these. Naphthoquinone and anthraquinone are particularly suitable. Among the chelators which may be optionally present in the adhesive composition are the beta-diketones, ethylenediamine tetraacetic acid (EDTA) and the sodium salt of EDTA. Both the inhibitors and chelators may be effectively employed in levels of about 0.1 to about 1% by weight of the monomer, without adversely affecting the speed of cure of the polymerizable adhesive/sealant composition.

In one embodiment the adhesion promoter (iii) is a mixture of at least two phosphorus-containing compounds having the general formula I as defined above, in one of which m is 1 and in the other of which m is 2, i.e. a mixture of a bis (hydroxyalkyl (meth)acrylate) acid phosphate and a hydroxyalkyl (meth)acrylate acid phosphate. A minor proportion of a compound of general formula I in which m is 3 may also be present e.g. in an amount up to about 10% by weight of the adhesion promoter. A commercially available adhesion promoter comprises (at least to the extent of up to about 80% by weight of the promoter) a combination of bis (2-hydroxyethyl methacrylate) acid phosphate and 2-hydroxyethyl methacrylate acid phosphate, as described in U.S. Patent Nos. 4, 044, 044 (Saito) and 4, 647, 638 (Yokoshima *et al*.). Such a promoter may also have a minor proportion (e.g. up to about 20% by weight) of other ingredients such as up to about 10% by weight of tris(2-hydroxyethyl methacrylate) acid phosphate and/or up to about 10% by weight of phosphoric acid.

The adhesion promoter is suitably used in an amount of 0.5 - 5% by weight based on the total composition. Desirably the promoter is used in an amount of 0.5 - 1% by weight based on the total composition. At a level less than 1% the amount of adhesion promoter is sufficiently small to satisfy product labelling requirements.

Suitable weight ranges of ingredients in the composition used in the invention are as follows:

| | |
|---|---|
| (Meth)acrylate resins: | 65 - 75% |
| Methacrylate monomers: | 15 - 19% |
| Curatives and stabilisers: | 2 - 4% |
| Thickeners and colourants: | 6 - 8% |
| Phosphomethacrylate ester based adhesion promoter: | 0.5 - 5% |

Thickeners, plasticizers, pigments, dyes, diluents, fillers, and other agents common in the art can be employed in any reasonable manner to produce desired functional characteristics, providing they do not significantly interfere with polymerization of the monomer.

### MODES FOR CARRYING OUT THE INVENTION

### Examples

The invention is illustrated in the following non-limiting examples, in which all parts are parts by weight.

The following abbreviations are used:
- RT =: room temperature
- NQ =: naphthoquinone
- EDTA =: ethylenediamine tetra acetic acid

### Example 1

A formulation was made with the following composition:

| **Component** | **% by Weight** |
|---|---|
| Methacrylate terminated urethane polyester | 63.52 |
| Acrylate terminated urethane polyester | 6.18 |
| Triethylene Glycol Dimethacrylate | 14.25 |
| Hydroxypropyl methacrylate | 2.0 |
| NQ Stabiliser | 0.1 |
| EDTA Stabiliser | 0.4 |
| Saccharin | 0.3 |
| Acetyl Phenyl Hydrazine | 0.45 |
| Pigments | 1.0 |
| Cumene hydroperoxide | 1.8 |
| Ebecryl 168 | 5.0 |
| Silica | 5.0 |

This composition was tested for tensile shear strength on solvent wiped aluminium lap shears with results as follows:

| **Test** | **Result** |
|---|---|
| 72 hour RT cure | 4.88 N/mm² |
| 72 hour RT cure + 7 days in water/glycol at 87°C - test at RT | 3.30 N/mm² |
| 72 hour RT cure + 7 days in motor oil at 120°C - test at RT | 7.80 N/mm² |

RT = Room temperature

These results show excellent retention of strength on the aluminium substrate after ageing conditions using Ebecryl 168 at 5%.

Ebecryl 168 is a methacrylate modified acidic adhesion promoter which is designed as a modifier for ultraviolet and electron beam (EB) curable coatings on metals. It is commercially available from UCB s.a. Chemical Sector, B - 1620 Drogenbos, Belgium.

Analytical results indicate that it is mainly a mixture of phosphomethacrylate esters, which is a combination of bis(2-hydroxyethyl methacrylate) acid phosphate and 2-hydroxyethyl methacrylate acid phosphate (about 80% by weight), with a minor proportion of tris(2-hydroxyethyl methacrylate) acid phosphate (about 8-10% by weight) and phosphoric acid (about 8-10% by weight).

### Example 2

A formulation was made with the following composition:

| **Component** | **% by Weight** |
|---|---|
| Methacrylate terminated urethane polyester | 65.34 |
| Acrylate terminated urethane polyester | 6.36 |
| Triethylene glycol dimethacrylate | 15.25 |
| Hydroxypropyl methacrylate | 2.0 |
| NQ Stabiliser | 0.1 |
| EDTA Stabiliser | 0.4 |
| Saccharin | 0.3 |
| Acetyl phenyl hydrazine | 0.45 |
| Pigments | 1.0 |
| Cumene hydroperoxide | 1.8 |
| Ebecryl 168 | 2.0 |
| Silica | 5.0 |

This composition was tested for tensile shear strength on solvent wiped aluminium lap shears with results as follows:

| **Test** | **Result** |
|---|---|
| 24 hour RT cure | 4.23 N/mm² |
| 24 hour RT cure + 7 days at 120°C - test at RT | 8.15 N/mm² |
| 24 hour RT cure + 7 days at 150°C - test at RT | 8.51 N/mm² |
| 24 hour RT cure + 7 days at 150°C in motor oil - test at RT | 7.49 N/mm² |
| 24 hour RT cure + 7 days at 120°C in water/glycol - test at RT | 1.22 N/mm² |

These results show the very good retention of adhesion on aluminium by use of the Ebecryl 168 adhesion promoter at a lower level of 2%.

### Example 3 - Comparison

Formulations were made with the following composition:

| | **% by Weight** | |
|---|---|---|
| **Component** | **No. 1** | **No.2** |
| Methacrylate terminated urethane polyester | 66.25 | 66.25 |
| Acrylate terminated urethane polyester | 6.45 | 6.45 |
| Triethylene glycol dimethacrylate | 16.0 | 15.35 |
| Hydroxypropyl methacrylate | 2.0 | 2.0 |
| NQ Stabiliser | 0.1 | 0.1 |
| EDTA Stabiliser | 0.4 | 0.4 |
| Saccharin | 0.3 | 0.3 |
| Acetyl phenyl hydrazine | 0.45 | 0.45 |
| Pigments | 1.0 | 1.0 |
| Cumene hydroperoxide | 1.8 | 1.8 |
| Ebecryl 168 | 0 | 0.9 |
| Silica | 5.0 | 5.0 |

These compositions were tested for tensile shear strength on solvent wiped aluminium lap shears with results as follows:

| | **Result** | |
|---|---|---|
| **Test** | **No.1** | **No.2** |
| 24 hour RT cure | 2.51 N/mm² | 3.04 N/mm² |
| 72 hour RT cure | 2.07 N/mm² | 2.65 N/mm² |
| 72 hour RT cure + 7 days at 120°C - test at RT | 0.44 N/mm² | 7.3 N/mm² |
| 72 hour RT cure + 7 days at 150°C - test at RT | 0.33 N/mm² | 7.06 N/mm² |
| 72 hour RT cure + 7 days at 150°C in motor oil - test at RT | 0.48 N/mm² | 4.41 N/mm² |
| 72 hour RT cure + 7 days at 120°C in water/glycol - test at RT | 0 | 1.6 N/mm² |
| 72 hour RT cure + test at 150°C (hot strength) | 0 | 3.23 N/mm² |

These results show the adhesion benefits of including the Ebecryl 168 particularly after the ageing of the test pieces in automotive fluids at temperature. The examples show that the effect is achieved even with the relatively low level addition of 0.9%.

| **Example 4 - Effect of Different Acidic Adhesion Promoters on the Strength Performance of an Anaerobic Flange Sealant on Aluminium Substrates** | | | | | |
|---|---|---|---|---|---|
| | **5205** | **5205 + 2% Ebecryl 168** | **5205 + 2% Acrylic Acid** | **5205 + 2% MAE** | **5205 + 0.9% GR 80** |
| RT Cure | 2.21 | 4.88 | 3.13 | 3.32 | 2.41 |
| 7 days at 87°C in Water/glycol | 0 after 2 hours | 3.30 | 0 after 1 day | 0 after 1 day | 0 after 2 hours |
| 7 days at 120°C in motor oil | 0 | 7.80 | 2.60 | 5.00 | ---- |

**Notes:**
1. **5205** is a commercially available Loctite (trade mark) anaerobic flange sealant composition with the following general composition:

| **Ingredient** | **Parts by Weight** |
|---|---|
| (Meth)acrylate terminated urethane polyesters | 72.69 |
| Methacrylate Monomers | 18.03 |
| Naphthaquinone and EDTA Stabiliser solutions | 0.54 |
| Saccharin | 0.3 |
| 1-aceto-2-phenyl hydrazine | 0.45 |
| Dyes | 1.1 |
| Cumene Hydroperoxide | 1.83 |
| Silica | 5.06 |

2. **MAE** is Maleic acid, 2-methacryloxyethyl ester
3. **GR 80** is an adhesion promoter based on the reaction of hydroxyethyl methacrylate and succinnic acid as follows: 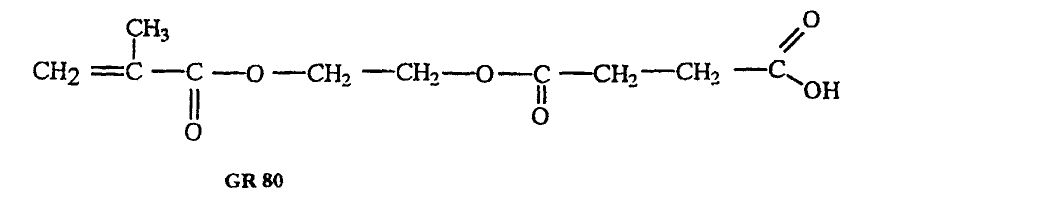
4. Acrylic acid, MAE and GR80 are typical of materials used as adhesion promoters.
5. All strength results are measured on Solvent Wiped Aluminium Lap Shears in N/mm².
6. Only the Ebecryl 168 is successful in retaining any adhesive strength after testing in the water/glycol mixture which simulates an engine coolant fluid at 87°C, a typical temperature found in the environment of the cooling circuit of an engine while it is working. The tests in motor oil at 120°C (which is a typical engine cylinder operating temperature) show that acrylic acid and MAE helps the performance of the sealant but the Ebecryl 168 shows a substantially better performance. This combination of results in water/glycol and motor oil shows that the phosphomethacrylate ester in the formulation gave the best overall strength retention on aluminium after ageing in an engine environment.

### Example 5

### Comparison of Performance of Two Different Anaerobic Flange Sealant Products:- Product A containing 4.1% Acrylic Acid and Product B containing 0.9% Ebecryl 168

| **Component** | **Product A** | **Product** B |
|---|---|---|
| Methacrylate terminated urethane polyester | 71.74 | 63.52 |
| Acrylate terminated urethane polyester | - | 6.18 |
| Polyethylene glycol dimethacrylate | 10.9 | |
| Triethylene glycol dimethacrylate | | 15.72 |
| Hydroxypropyl methacrylate | | 1.88 |
| Naphthoquinone Stabiliser | 0.16 | 0.42 |
| EDTA Stabiliser | 0.7 | 0.4 |
| Saccharin | 0.9 | 0.3 |
| 1-aceto-2-phenyl hydrazine | 0.4 | 0.2 |
| Dyes | 1.5 | 1.9 |
| Acrylic acid | 4.1 | 0 |
| Ebecryl 168 | 0 | 0.89 |
| Cumene Hydroperoxide | 2.6 | 1.8 |
| Silica | 7.0 | 6.8 |

These compositions which are based on actual product formulations used for automotive flange sealing applications were tested for tensile shear strength on grit blasted and then solvent wiped Aluminium lap shears. The results were as follows:

| | **Product A** | | **Product B** | |
|---|---|---|---|---|
| **Test** | **Strength** | **Change** | **Strength** | **Change** |
| 72 hour RT cure | 4.1 N/mm² | ---- | 2.5 N/mm² | ---- |
| 72 hour RT cure + 72 hours at 120°C, immersion in motor oil | 7.7 N/mm² | +88% | 12.7 N/mm² | +500% |
| 72 hour RT cure + 72 hours at 95°C, immersion in water/glycol | 2.6 N/mm² | -36% | 5.5 N/mm² | +220% |

Note: these tests are shorter in length than the earlier examples but still show the improved environmental resistance of the product with Ebecryl 168 compared to the product with a much higher level of acrylic acid.

### Example 6

Product B of Example 5 was tested on a water pump flange to seal against water/glycol. The test was carried out using a water pump of aluminium (i.e. having an aluminium flange) to seal against a cast iron flange in face-to-face contact. The product was allowed to cure for 72 hours at room temperature. The liquid contained by the seal was water/glycol. The seal was tested at 7 bar pressure and showed no leaks. It was subjected to hot/cold cycles from -30°C to 130°C with a cycle duration of 3 hours for a total of 70 cycles. At the end of this test the seal still resisted 7 bar pressure. This substantially exceeded the desired level of 25 bars.

## Claims

1. A method of providing a seal between an aluminium substrate and a second substrate, said seal being exposed to engine fluids selected from oils and/or coolant mixtures at elevated temperatures in the range from 60°C to 175°C, wherein the method includes the steps of:
(a) applying to at least one of the substrates an anaerobic sealant composition comprising:
(i) one or more polymerizable (meth)acrylate ester monomers,
(ii) an anaerobic cure-inducing component, and
(iii) an adhesion promoter comprising one or more phosphorus-containing compounds having the general formula I 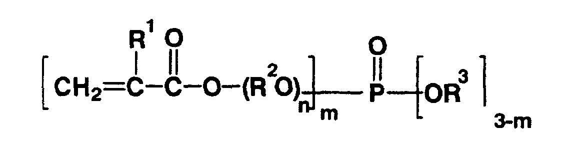 wherein:
R¹ is H, CH₃ or C₂H₅
R² is -CH₂-, -C₂H₄-, -C₃H₆-, or -CH₂-CH(CH₃)-
R³ is H, CH₃ or C₂H₅
n is an integer from 1 to 10, and m is an integer from 1 to 3,
(b) bringing the substrates into face-to-face contact, and
(c) allowing or enabling the composition to cure at substantially ambient temperature.

2. A method according to claim 1 wherein the adhesion promoter comprises a combination of at least two phosphorus - containing compounds having the general formula I, in one of which m is 1 and in the other of which m is 2.

3. A method according to claim 1 wherein the adhesion promoter comprises compounds of the formula I in which R¹ is CH₃ and R³ is H.

4. A method according to claim 2 wherein the adhesion promoter comprises a combination of bis(2-hydroxyethyl methacrylate) acid phosphate and 2-hydroxyethyl methacrylate acid phosphate, optionally with the addition of tris(2-hydroxyethyl methacrylate) acid phosphate.

5. A method according to claim 2 wherein the adhesion promoter is used in an amount of 0.5 - 5% by weight, particularly 0.5 - 1% by weight, based on the total composition.

6. A method according to claim 1 of providing a seal between an aluminium substrate and a second substrate in an engine, said seal being exposed to engine fluids at engine operating temperatures in the range from -30°C to +150°C.

7. A method according to claim 6 wherein the fluids include oil and/or water/glycol mixtures.

8. A method according to claim 1 of providing a seal between an aluminium substrate and a second substrate in the cooling circuit of an engine, said seal being exposed to water/glycol mixtures at engine cooling-circuit temperatures in the range from 80 to 130°C.

9. Use of one or more phosphorus-containing compounds of the general formula I as defined in claim 1 as an adhesion promoter in an anaerobic sealant composition which is curable at substantially ambient temperature, for providing a seal between an aluminium substrate and a second substrate, said composition having the ability to retain adhesion on the aluminium substrate while exposed to engine fluids selected from oils and/or coolant mixtures at elevated temperatures in the range from 60°C to 175°C.

10. Use according to claim 9 wherein the adhesion promoter comprises a combination of at least two phosphorous - containing compounds, having the general formula I, in one of which m is 1 and in the second of which m is 2.

11. Use according to claim 9 wherein the adhesion promoter comprises compounds of the formula I in which R¹ is CH₃ and R³ is H.

12. Use according to claim 10 wherein the adhesion promoter comprises a combination of at least bis(2-hydroxyethyl methacrylate) acid phosphate and 2-hydroxyethyl methacrylate acid phosphate.

13. Use according to any of claims 9-12 wherein the adhesion promoter is used in an amount of 0.5 -5% by weight, particularly 0.5 - 1% by weight, based on the total composition.

14. Use according to any of claims 9-13 for providing a seal between an aluminium substrate and a second substrate in an engine, said seal being exposed to engine fluids at engine operating temperatures in the range from -30°C to +150°C.

15. Use according to any of claims 9-13 for providing a seal between an aluminium substrate and a second substrate in the cooling circuit of an engine, said seal being exposed to water/glycol mixtures at engine cooling-circuit temperatures in the range from 80 to 130°C.

16. An assembly of substrates in face-to-face contact, having a seal provided by a method according to claim 1.

17. An assembly according to claim 16 of an aluminium flange against a second substrate.

18. An engine incorporating an assembly of substrates according to claim 16 or 17.

19. A method of providing a seal between an aluminium substrate and a second substrate, said seal having the ability to retain adhesion on the aluminium substrate while exposed to engine fluids at temperatures up to the range of 60°C to 175°C, wherein the method includes the steps of:
(a) applying to at least one of the substrates an anaerobic sealant composition comprising:
(i) one or more polymerizable (meth)acrylate ester monomers,
(ii) an anaerobic cure-inducing component, and
(iii) an adhesion promoter comprising one or more phosphorus-containing compounds having the general formula I 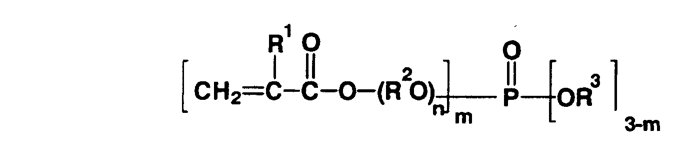 wherein:
R¹ is H, CH₃ or C₂H₅
R² is -CH₂-, -C₂H₄-, -C₃H₆-, or -CH₂-CH(CH₃)-
R³ is H, CH₃ or C₂H₅
n is an integer from 1 to 10, and m is an integer from 1 to 3,
(b) bringing the substrates into face-to-face contact, and
(c) allowing or enabling the composition to cure at substantially ambient temperature.

## Patentansprüche

1. Verfahren zur Bereitstellung einer Dichtung zwischen einem Aluminiumsubstrat und einem zweiten Substrat, wobei die genannte Dichtung Motorflüssigkeiten, ausgewählt aus Ölen und/oder Kühlmittelmischungen, bei erhöhten Temperaturen im Bereich von 60°C bis 175°C ausgesetzt ist, wobei das Verfahren die Schritte umfaßt:
(a) Auftragen einer anaeroben Dichtmittelzusammensetzung auf wenigstens eines der Substrate, umfassend:
(i) ein oder mehrere polymerisierbare (Meth)acrylatestermonomere,
(ii) eine die anaerobe Härtung hervorrufende Komponente und
(iii) einen Haftvermittler, umfassend eine oder mehrere phosphorhaltige Verbindungen mit der allgemeinen Formel I 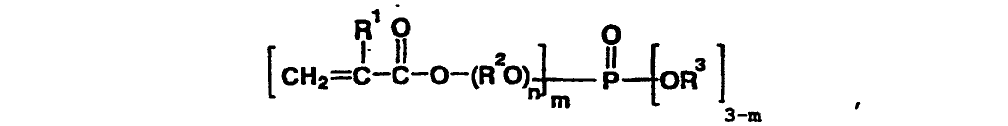 wobei:
R¹ H, CH₃ oder C₂H₅ ist,
R² -CH₂-, -C₂H₄-, -C₃H₆- oder -CH₂-CH(CH₃)- ist,
R³ H, CH₃ oder C₂H₅ ist,
n eine ganze Zahl von 1 bis 10 ist und m eine ganze Zahl von 1 bis 3 ist,
(b) die Substrate in unmittelbaren Kontakt bringen und
(c) die Härtung der Zusammensetzung im wesentlichen bei Umgebungstemperatur zu gestatten oder zu ermöglichen.

2. Verfahren gemäß Anspruch 1, bei dem der Haftvermittler eine Kombination aus wenigstens zwei phosphorhaltigen Verbindungen mit der allgemeinen Formel I umfaßt, wobei bei der einen m 1 ist: und bei der anderen m 2 ist.

3. Verfahren gemäß Anspruch 1, bei dem der Haftvermittler Verbindungen der Formel I umfaßt, wobei R¹ CH₃ ist und R³ H ist.

4. Verfahren gemäß Anspruch 2, bei dem der Haftvermittler eine Kombination aus Bis(2-hydroxyethylmethacrylat)säurephosphat und 2-Hydroxyethylmethacrylatsäurephosphat umfaßt, gegebenenfalls unter Zusatz von Tris(2-hydroxyethylmethacrylat)säurephosphat.

5. Verfahren gemäß Anspruch 2, bei dem der Haftvermittler in einer Menge von 0,5-5 Gew.-%, insbesondere 0,5-1 Gew.-%, bezogen auf die Gesamtzusammensetzung, verwendet wird.

6. Verfahren gemäß Anspruch 1 zur Bereitstellung einer Dichtung zwischen einem Aluminiumsubstrat und einem zweiten Substrat in einem Motor, wobei die genannte Dichtung Motorflüssigkeiten bei Motorbetriebstemperaturen im Bereich von -30°C bis +150°C ausgesetzt ist.

7. Verfahren gemäß Anspruch 6, bei dem die Flüssigkeiten u.a. Öl und/oder Wasser/Glycol-Mischungen sind.

8. Verfahren gemäß Anspruch 1 zur Bereitstellung einer Dichtung zwischen einem Aluminiumsubstrat und einem zweiten Substrat in dem Kühlkreislauf eines Motors, wobei die genannte Dichtung Wasser/Glycol-Mischungen bei Motorkühlkreislauftemperaturen im Bereich von 80°C bis 130°C ausgesetzt ist.

9. Verwendung von einer oder mehreren phosphorhaltigen Verbindungen der allgemeinen Formel I, wie sie in Anspruch 1 definiert ist, als Haftvermittler in einer anaeroben Dichtmittelzusammensetzung, die im wesentlichen bei Umgebungstemperatur härtbar ist, um eine Dichtung zwischen einem Aluminiumsubstrat und einem zweiten Substrat zur Verfügung zu stellen, wobei die Zusammensetzung in der Lage ist, die Haftung auf dem Aluminiumsubstrat beizubehalten, während sie Motorflüssigkeiten, ausgewählt aus Ölen und/oder Kühlmittelmischungen, bei erhöhten Temperaturen im Bereich von 60°C bis 175°C ausgesetzt ist.

10. Verwendung gemäß Anspruch 9, bei der der Haftvermittler eine Kombination aus wenigstens zwei phosphorhaltigen Verbindungen mit der allgemeinen Formel I umfaßt, wobei bei der einen m 1 ist: und bei der zweiten m 2 ist.

11. Verwendung gemäß Anspruch 9, bei der der Haftvermittler Verbindungen der Formel I umfaßt, wobei R¹ CH₃ ist und R³ H ist.

12. Verwendung gemäß Anspruch 10, bei der der Haftvermittler eine Kombination aus wenigstens Bis(2-hydroxyethylmethacrylat)säurephosphat und 2-Hydroxyethylmethacrylatsäurephosphat umfaßt.

13. Verwendung gemäß irgendeinem der Ansprüche 9-12, bei der der Haftvermittler in einer Menge von 0,5-5 Gew.-%, insbesondere 0,5-1 Gew.-%, bezogen auf die Gesamtzusammensetzung, verwendet wird.

14. Verwendung gemäß irgendeinem der Ansprüche 9-13 zur Bereitstellung einer Dichtung zwischen einem Aluminiumsubstrat und einem zweiten Substrat in einem Motor, wobei die genannte Dichtung Motorflüssigkeiten bei Motorbetriebstemperaturen im Bereich von -30°C bis +150°C ausgesetzt ist.

15. Verwendung gemäß irgendeinem der Ansprüche 9-13 zur Bereitstellung einer Dichtung zwischen einem Aluminiumsubstrat und einem zweiten Substrat in dem Kühlkreislauf eines Motors, wobei die genannte Dichtung Wasser/Glycol-Mischungen bei Motorkühlkreislauftemperaturen im Bereich von 80°C bis 130°C ausgesetzt ist.

16. Anordnung von Substraten in unmittelbarem Kontakt, die eine durch ein Verfahren gemäß Anspruch 1 bereitgestellte Dichtung besitzt.

17. Anordnung gemäß Anspruch 16 eines Aluminiumflansches gegen ein zweites Substrat.

18. Motor, der eine Substratanordnung gemäß Anspruch 16 oder 17 umfaßt.

19. Verfahren zur Bereitstellung einer Dichtung zwischen einem Aluminiumsubstrat und einem zweiten Substrat, wobei die genannte Dichtung in der Lage ist, die Haftung auf dem Aluminiumsubstrat beizubehalten, während sie Motorflüssigkeiten bei Temperaturen bis in den Bereich von 60°C bis 175°C ausgesetzt ist, wobei das Verfahren die Schritte umfaßt:
(a) Auftragen einer anaeroben Dichtmittelzusammensetzung auf wenigstens eines der Substrate, umfassend:
(i) ein oder mehrere polymerisierbare (Meth)acrylatestermonomere,
(ii) eine die anaerobe Härtung hervorrufende Komponente und
(iii) einen Haftvermittler, umfassend eine oder mehrere phosphorhaltige Verbindungen mit der allgemeinen Formel I 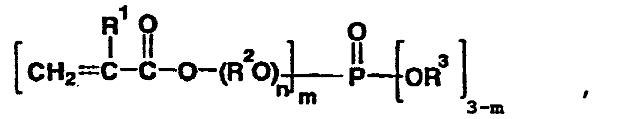 wobei:
R¹ H, CH₃ oder C₂H₅ ist,
R² -CH₂-, -C₂H₄-, -C₃H₆- oder -CH₂-CH(CH₃)- ist,
R³ H, CH₃ oder C₂H₅ ist,
n eine ganze Zahl von 1 bis 10 ist und m eine ganze Zahl von 1 bis 3 ist,
(b) die Substrate in unmittelbaren Kontakt bringen und
(c) die Härtung der Zusammensetzung im wesentlichen bei Umgebungstemperatur zu gestatten oder zu ermöglichen.

## Revendications

1. Procédé de fourniture d'un élément d'étanchéité entre un substrat en aluminium et un second substrat, ledit élément d'étanchéité étant: exposé à des fluides moteurs choisis entre des huiles et/ou des mélanges de refroidissement à des températures élevées, dans l'intervalle de 60 °C à 175 °C, le procédé comprenant les étapes consistant à :
(a) appliquer à au moins l'un des substrats une composition d'étanchéité anaérobie comprenant :
(i) un ou plusieurs monomères esters (méth)acrylate polymérisables,
(ii) un composant d'induction du durcissement anaérobie, et
(iii) un promoteur d'adhérence comprenant un ou plusieurs composés contenant du phosphore répondant à la formule générale I: 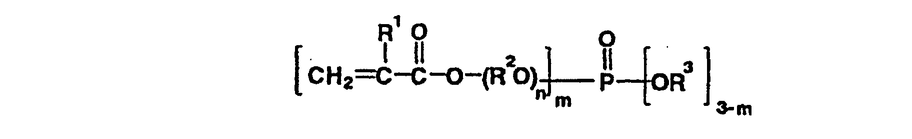 dans laquelle :
R¹ représente H, CH₃ ou C₂H₅,
R² représente -CH₂-, -C₂H₄-, -C₃H₆- ou -CH₂-CH(CH₃)-,
R³ représente H, CH₃ ou C₂H₅,
n est un nombre entier de 1 à 10, et m est un nombre entier de 1 à 3,
(b) amener les substrats en contact face à face, et
(c) laisser la composition, ou lui permettre de, durcir essentiellement à la température ambiante.

2. Procédé suivant la revendication 1, dans lequel le promoteur d'adhérence comprend une combinaison d'au moins deux composés contenant du phosphore répondant à la formule générale I, m ayant une valeur de 1 dans l'un d'entre eux et une valeur de 2 dans l'autre.

3. Procédé suivant la revendication 1, dans lequel le promoteur d'adhérence comprend des composés de formule I dans laquelle R¹ représente CH₃ et R³ représente H.

4. Procédé suivant la revendication 2, dans lequel le promoteur d'adhérence comprend une combinaison de phosphate acide de bis(méthacrylate de 2-hydroxyéthyle) et de phosphate acide de méthacrylate de 2-hydroxyéthyle, avec l'addition facultative de phosphate acide de tris(méthacrylate de 2-hydroxyéthyle).

5. Procédé suivant la revendication 2, dans lequel le promoteur d'adhérence est utilisé en une quantité de 0,5 à 5 % en poids, en particulier de 0,5 à 1 % en poids, sur la base de la composition totale.

6. Procédé suivant la revendication 1 de fourniture d'un élément d'étanchéité entre un substrat en aluminium et un second substrat dans un moteur, ledit élément d'étanchéité étant exposé à des fluides moteurs à des températures de fonctionnement du moteur situées dans l'intervalle de -30 °C à +150 °C.

7. Procédé suivant la revendication 6, dans lequel les fluides comprennent une huile et/ou des mélanges eau/glycol.

8. Procédé suivant la revendication 1, de fourniture d'un élément d'étanchéité entre un substrat en aluminium et un second substrat dans le circuit de refroidissement d'un moteur, ledit élément d'étanchéité étant exposé à des mélanges eau/glycol à des températures du circuit de refroidissement du moteur situées dans l'intervalle de 80 à 130 °C.

9. Utilisation d'un ou plusieurs composés contenant du phosphore de formule générale I telle que définie dans la revendication 1, comme promoteur(s) d'adhérence dans une composition d'étanchéité anaérobie qui est durcissable essentiellement à la température ambiante, pour fournir un élément d'étanchéité entre un substrat en aluminium et un second substrat, ladite composition présentant une aptitude à conserver une adhérence au substrat en aluminium tout en étant exposée à des fluides moteurs choisis entre des huiles et/ou des mélanges de refroidissement à des températures élevées, situées dans l'intervalle de 60 °C à 175 °C.

10. Utilisation suivant la revendication 9, dans laquelle le promoteur d'adhérence comprend une combinaison d'au moins deux composés contenant du phosphore, répondant à la formule générale **I,** m ayant une valeur de 1 dans l'un d'entre eux et une valeur de 2 dans l'autre.

11. Utilisation suivant la revendication 9, dans laquelle le promoteur d'adhérence comprend des composés de formule I dans laquelle R¹ représente CH₃ et R³ représente H.

12. Utilisation suivant la revendication 10, dans laquelle le promoteur d'adhérence comprend une combinaison constituée au moins de phosphate acide de bis(méthacrylate de 2-hydroxyéthyle) et de phosphate acide de méthacrylate de 2-hydroxyéthyle.

13. Utilisation suivant l'une quelconque des revendications 9 à 12, dans laquelle le promoteur d'adhérence est utilisé en une quantité de 0,5 à 5 % en poids, en particulier de 0,5 à 1 % en poids, sur la base de la composition totale.

14. Utilisation suivant l'une quelconque des revendications 9 à 13, pour fournir un élément d'étanchéité entre un substrat en aluminium et un second substrat dans un moteur, ledit élément d'étanchéité étant exposé à des fluides moteurs à des températures de fonctionnement du moteur situées dans l'intervalle de -30 °C à +150 °C.

15. Utilisation suivant l'une quelconque des revendications 9 à 13, pour fournir un élément d'étanchéité entre un substrat en aluminium et un second substrat dans le circuit de refroidissement d'un moteur, ledit élément d'étanchéité étant exposé à des mélanges eau/glycol à des températures du circuit de refroidissement du moteur situées dans l'intervalle de 80 à 130 °C.

16. Assemblage de substrats en contact face à face, pourvu d'un élément d'étanchéité obtenu par un procédé suivant la revendication 1.

17. Assemblage suivant la revendication 16 d'un collet en aluminium contre un second substrat.

18. Incorporation dans un moteur d'un assemblage de substrats suivant la revendication 16 ou 17.

19. Procédé de fourniture d'un élément d'étanchéité entre un substrat en aluminium et un second substrat, ledit élément d'étanchéité présentant une aptitude à conserver une adhérence sur le substrat en aluminium tout en étant exposé à des fluides moteurs à des températures pouvant atteindre l'intervalle de 60 °C à 175 °C, le procédé comprenant les étapes consistant à:
(a) appliquer à au moins l'un des substrats une composition d'étanchéité anaérobie comprenant :
(i) un ou plusieurs monomères esters (méth)acrylate polymérisables,
(ii) un composant d'induction du durcissement anaérobie, et
(iii) un promoteur d'adhérence comprenant un ou plusieurs composés contenant du phosphore répondant à la formule générale I : 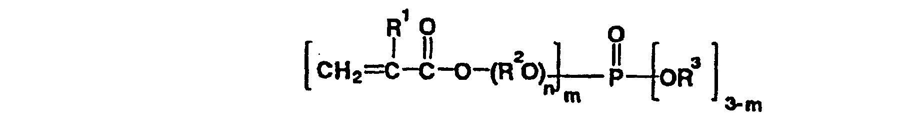 dans laquelle :
R¹ représente H, CH₃ ou C₂H₅,
R² représente -CH₂-, -C₂H₄-, -C₃H₆- ou -CH₂-CH(CH₃)-,
R³ représente H, CH₃ ou C₂H₅,
n est un nombre entier de 1 à 10, et m est un nombre entier de 1 à 3,
(b) amener les substrats en contact face à face, et
(c) laisser la composition, ou lui permettre de, durcir essentiellement à la température ambiante.
